# EUROPÄISCHE PATENTSCHRIFT

(11) **EP 1 743 554 B1**
(45) Veröffentlichungstag und Bekanntmachung des Hinweises auf die Patenterteilung: **30.04.2008**
(21) Anmeldenummer: 06014424.3
(22) Anmeldetag: 11.07.2006
(51) Int. Cl.: A47J 31/46

(54) **Espressomaschine mit einer Espressobrüheinheit**
Espresso machine with a brewing device
Machine espresso avec unité d'infusion

(30) Priorität: 16.07.2005 DE 202005011204 U
(43) Veröffentlichungstag der Anmeldung: 17.01.2007
(73) Patentinhaber: Eugster/Frismag AG, 8590 Romanshorn (CH)
(72) Erfinder: Oehninger, Max, 8712 Stäfa ZH (CH)
(74) Vertreter: Schubert, Siegmar

(56) Entgegenhaltungen:
- EP-A- 0 486 434
- DE-A1- 4 208 854
- DE-U1-6202004 018 77

## Beschreibung

Die Erfindung betrifft eine Espressomaschine mit einer Espressobrüheinheit und einer mit der Espressobrüheinheit über ein Cremaventil in fluidleitender Verbindung stehenden Kaffeeauslaufleitung mit einem endseitigen Kaffeeauslauf nach dem Oberbegriff des Anspruchs 1.

Bei derartigen aus der Praxis bekannten Espressomaschinen verbleibt in der Kaffeeauslaufleitung, die als Schlauch- und/oder Rohrleitung die Espressobrüheinheit mit dem Kaffeeauslauf verbindet, nach Ende des Brühvorganges und damit Verschließen des Cremaventils, Restkaffee in der Kaffeeauslaufleitung. Dieser verläßt entweder als schleichende Leckage den Kaffeeauslauf auch dann, wenn unter diesem kein Gefäß abgestellt ist, oder der Restkaffee verbleibt bis zu einem nächsten Brühvorgang in der Kaffeeauslaufleitung, womit er eine Qualitätseinbuße des später frisch gebrühten Espressos verursachen kann. Die schleichende Leckage aus dem Kaffeeauslauf kann dessen Umgebung verschmutzen und bei unvorsichtiger oder ungeschickter Handhabung ist sogar eine Verbrühungsgefahr nicht gänzlich auszuschließen.

Der vorliegenden Erfindung liegt daher die Aufgabe zugrunde, unter Vermeidung der obigen Nachteile, eine Espressomaschine so weiterzubilden, daß nach dem Brühvorgang, während dessen eine oder mehrere Espressotassen unter dem Kaffeeauslauf gefüllt wurden, kein Kaffeesud bzw. Espresso aus dem Kaffeeauslauf unkontrolliert ausläuft, was mit möglichst unkomplizierten Mitteln erreicht werden soll.

Diese Aufgabe wird mit einer Espressomaschine gelöst, welche die in Anspruch 1 angegebenen Merkmale aufweist.

Wesentlich ist bei dieser Espressomaschine das Prinzip, daß mit der Kaffeeauslaufleitung zwischen dem Cremaventil und dem Kaffeeauslauf, also an einer von dem Kaffeeauslauf entfernten Stelle eine Rücksaugeinheit in fluidleitender Verbindung steht, die selbsttätig nach Beendigung eines Brühvorganges aktiviert wird. Die Unterbindung einer schleichenden Leckage nach dem Brühvorgang erfordert somit keine Aufmerksamkeit einer Bedienungsperson und keinen zusätzlichen Bedienungsaufwand.

Die selbsttätig nach Beendigung eines Brühvorganges aktivierbare Rücksaugeinheit, die den Kaffeerest aus der Kaffeeauslaufleitung absaugt, bevor dieser aus dem Auslauf austreten kann, wird in verschiedener Weise realisiert:

In einer bevorzugten Ausführungsform der Rücksaugeinheit, mit der die Kaffeeauslaufleitung zuverlässig zwangsläufig entleert wird, so daß in dieser nach Abschluß des Brühvorgangs kein Restkaffee verbleibt, wird nach Anspruch 2 von einer Espressobrüheinheit ausgegangen, die, wie an sich bekannt, eine Brühkammer mit wenigstens einem verstellbaren Brühkammerelement aufweist, das nach Beendigung des Brühvorgangs in eine andere Position als zuvor verstellt wird. Diese Verstellung wird auch zum Antrieb der Rücksaugeinheit genutzt, die außerhalb der Brühkammer benachbart zu dem verstellbaren Brühkammerelement angeordnet ist und einen Saugkolben hat, der in einem Saugzylinder verschiebbar ist. Der Saugzylinder ist mit einer Ablaufleitung verbunden, die zu einer Stelle der Espressomaschine führt, an der der Restkaffee unproblematisch, z.B. in eine Auffangschale, abgegeben werden kann. Der Begriff des verstellbaren Brühkammerelements ist weit aufzufassen; er kann insbesondere ein Antriebsorgan des verstellbaren Brühkammerelements oder ein Verbindungsorgan zwischen letzterem und dem Antriebsorgan umfassen. Die Betätigung der Rücksaugeinheit erfolgt jedenfalls automatisch und mit der Verstellung des verstellbaren Brühkammerelements synchronisiert, die zum Ausüben der normalen Espressobrühfunktion der Espressobrüheinheit erfolgt.

Besonders bevorzugt ist gemäß Anspruch 3 das verstellbare Brühkammerelement ein Brühkammerzylinder, der unterhalb eines Oberkolbens angeordnet ist, so daß er zusammen mit diesem eine Brühkammer gegebenenfalls unter Einschluß eines Unterkolbens bilden kann. Auf den Oberkolben kann der Brühkammerzylinder mit einer Brühkammerzylinderantriebseinrichtung, die insbesondere eine Hubspindel umfassen kann, im wesentlichen vertikal geschoben werden, um die Brühkammer vollständig abzuschließen. Nach dem Brühvorgang wird der Brühkammerzylinder mit der Brühkammerzylinderantriebseinrichtung vertikal abgesenkt, damit die Verbindung zu dem Oberkolben gelöst wird und dieser begrenzt horizontal mit einer Oberkolbenantriebseinrichtung verschoben werden kann, um die Brühkammer vollständig zu öffnen, so daß ein Kaffeekuchen ausgestoßen werden kann und ggf. anschließend eine frische Portion Kaffeemehl von der Brühkammer aufgenommen werden kann, bevor diese wieder geschlossen wird. Die Kopplung der Vertikalbewegung des Brühkammerzylinders zu dem Saugkolben der Rücksaugeinheit bzw. eine Entkoppelung erfolgt automatisch und zuverlässig durch die horizontale Verschiebung des Oberkolbens im Verlaufe dessen normalen Funktionsablaufs, für den insbesondere eine Zwangsablaufsteuerung vorgesehen sein kann. Nach der Koppelung wird die anschließende vertikale Bewegung des Brühkammerzylinders auf den Saugkolben übertragen. Der Antrieb des Brühkammerzylinders dient somit auch zum Betätigen des Saugkolbens. Der Brühkammerzylinder wird insbesondere mit einer Hubspindel mit einem Antriebsrad und einem dieses antreibenden Ritzels vertikal verschoben. Mit dieser vertikalen Verschiebung des Brühkammerzylinders ist bei gekoppelten Koppelelementen, wenn der Oberkolben in eine benachbarte Stellung zu dem Brühkammerzylinder, d.h. in eine Schließposition der Brühkammer geschoben ist, eine parallele Verschiebung des Saugkolbens verbunden. Hingegen wird eine horizontale Verschiebung des Brühkammerzylinders, die ebenfalls zum Ausüben der Gesamtfunktion der Espressobrüheinheit vorgesehen ist, nicht auf den Saugkolben übertragen, sondern sie bestimmt nur die Kopplung des Brühkammerzylinders mit dem Saugkolben.

Damit die Koppelelemente in obiger Weise koppeln bzw. entkoppeln, ist gemäß Anspruch 4 wenigstens eines der Koppelelemente mit dem Brühkammerzylinder verbunden, während wenigstens ein anderes der Koppelelemente mit dem Kolbenpleuel des Saugkolbens in Verbindung steht. Dabei kann es sich um eine einfache kraft- und formschlüssige Verbindung handeln.

Besonders geeignet, da zuverlässig und verschleißarm, sind die Koppelelemente gemäß Anspruch 5 ausgeführt. Durch die Ausbildung des Saugzylinders mit dem Oberkolben als Einheit wird eine kompakte, robuste Bauweise erzielt. Die Einheit ist insbesondere ein Oberkolbenschlitten. Die Koppelelemente können einerseits durch einen stirnseitig offenen horizontalen Schlitz in einer Antriebsstange an dem Brühkammerzylinder und andererseits einen durch horizontale Verschiebung des Oberkolbens in die Nut einführbaren Bolzen realisiert sein. Wenn der Bolzen in die Nut horizontal eingeschoben ist, wird die Verbindung Nut/Bolzen bei einer vertikalen Bewegung des Brühkammerzylinders mitgenommen und der Saugkolben entsprechend mitbewegt. Wenn der Brühkammerzylinder nach einem Brühvorgang abgesenkt wird, um sich von dem Oberkolben zu lösen, wird entsprechend der Saugkolben in dem Saugzylinder abgesenkt, wodurch der Restkaffee aus der Kaffeeauslaufleitung abgesaugt wird.

Am Ende dieser Bewegung befindet sich der Saugkolben an seinem unteren Totpunkt gemäß Anspruch 6 unterhalb einer Öffnung in dem Saugzylinder, aus der der Restkaffee über eine Ablaufleitung ungestört abfließen kann. Er wird beispielsweise durch eine Auffangschale aufgefangen, wo er nicht stört. Die weitgehend freizügig wählbare Abzweigstelle einer Saugleitung von der Kaffeeauslaufleitung zu dem Saugzylinder ist ebenfalls in Anspruch 6 angegeben.

In einer zweiten Ausführungsform der Rücksaugeinheit nach Anspruch 7 bildet die Brühkammer selbst einen Teil der Rücksaugeinheit für den Restkaffee, die im wesentlichen nur durch ein zusätzliches Ventil zwischen der Brühkammer und der Kaffeeauslaufleitung strömungsmäßig parallel zu dem Cremaventil vervollständigt ist. In diesem Fall wird nach Abschluß eines Brühvorgangs der Restkaffee aus der Kaffeeauslaufleitung über das geöffnete Ventil abgesaugt, wenn der Brühkammerzylinder zusammen mit dem Unterkolben abgesenkt wird und in der Brühkammer vor dem Öffnen ein Unterdruck entsteht. Der deshalb in die Brühkammer zurückfließende Restkaffee kann bei Entfernen des Kaffeekuchens mit diesem beseitigt werden.

Das zusätzliche Ventil, welches zu dem Cremaventil parallel geschaltet ist, weist in der Variante nach Anspruch 8 eine federbelastete Kugel auf, die das Ventil bei Unterdruck in der Brühkammer öffnet, während die Kugel sonst unter der Federbelastung den Ventilsitz abschließt.

In einer Variante des Ventils nach Anspruch 9, die als dritte Ausführungsform der Rücksaugeinheit angesehen werden kann, weist das Ventil eine nur durch Schwerkraft belastete Kugel normalerweise auf einem unteren Ventilsitz auf, der ständig fluidleitend ist und der zum Ableiten von Restkaffee aus der Kaffeeauslaufleitung nach einem Brühvorgang dient, sobald der Druck in der Brühkammer unter einen vorgegebenen Wert absinkt. Hingegen wird bei Überdruck in der Brühkammer, wenn insbesondere aufgebrühter Espresso gemäß der normalen Funktion der Espressomaschine über das Cremaventil durch die Kaffeeauslaufleitung in eine oder mehrere Tassen abfließt, die Kugel entgegen der Schwerkraft an den oberen Ventilsitz gedrückt, wodurch das Ventil dicht schließt.

Ausführungsbeispiele der Erfindung werden im folgenden anhand einer Zeichnung mit sechs Figuren beschrieben. Es zeigt:
- Figur 1: eine erste bevorzugte Ausführungsform einer mit einer Espressobrüheinheit in Verbindung stehenden Rücksaugeinheit in einer Seitenansicht, teilweise geschnitten, in einer Stellung der Espressobrüheinheit, bei der ein Rücksaugvorgang von Restkaffee abgeschlossen ist,
- Figur 2: die Espressobrüheinheit und die Rücksaugeinheit nach Figur 1, jedoch in einer Ausgangsstellung,
- Figur 3: die Espressobrüheinheit und die Rücksaugeinheit nach Figur 1, jedoch in einer sich an die Ausgangsstellung anschließenden Stellung, in der der Rücksaugvorgang vorbereitet ist,
- Figur 4: eine Variante der Espressobrüheinheit im wesentlichen gemäß Figur 1, jedoch mit einer zweiten Ausführungsform der Rücksaugeinheit in einer Seitenansicht, teilweise geschnitten,
- Figur 5: eine weitere Variante der Espressobrüheinheit im wesentlichen gemäß Figur 1, jedoch mit einer dritten Ausführungsform der Rücksaugeinheit in einer Seitenansicht, teilweise geschnitten und
- Figur 6: eine Einzelheit der dritten Ausführungsform der Rücksaugeinheit, nämlich eine vergrößerte Draufsicht auf einen unteren Ventilsitz.

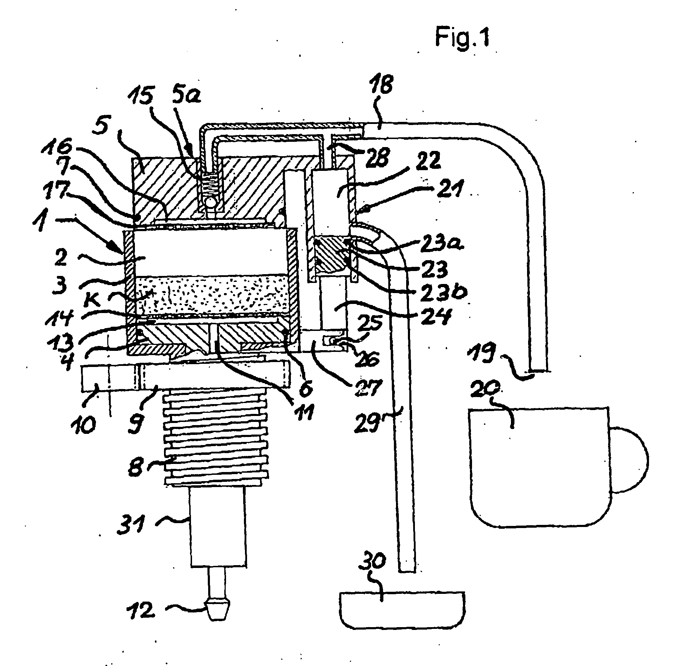

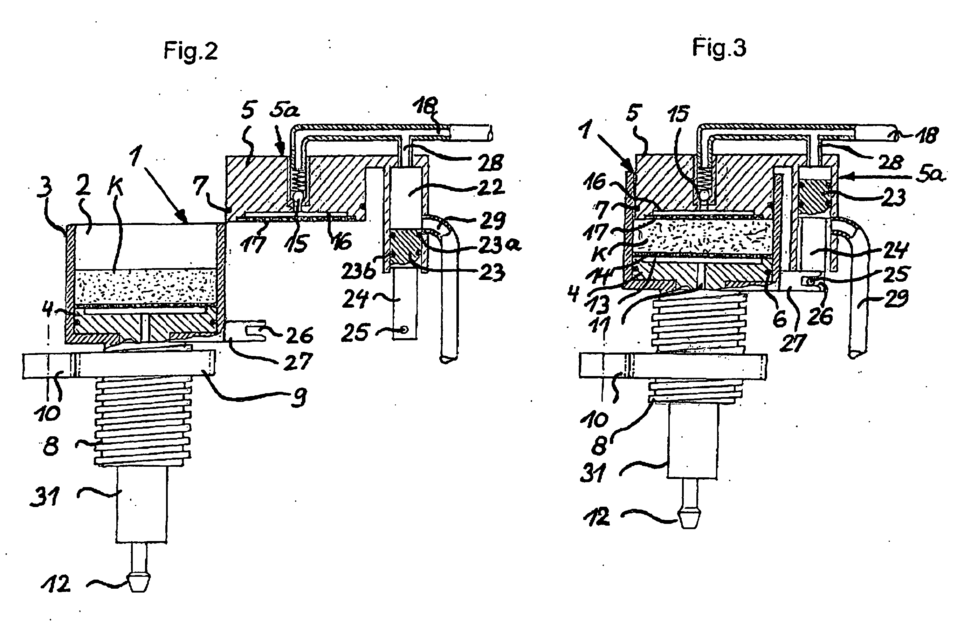

In Figur 1 ist mit 1 eine Espressobrüheinheit bezeichnet, die zusammen mit weiteren, in der Zeichnung nicht dargestellten Teilen einen wesentlichen Bestandteil einer Espressomaschine bildet. Die Espressobrüheinheit umfaßt eine Brühkammer 2, die von einem vertikal beweglichen Brühkammerzylinder 3, einem Unterkolben 4 und einem Oberkolben 5 begrenzt wird. Zur Abdichtung der geschlossenen Brühkammer 3 dienen je eine in den Außenumfang des Unterkolbens 4 bzw. des Oberkolbens 5 eingelassene Dichtung 6 bzw. 7. Zur vertikalen Verstellung ist der Brühkammerzylinder mit einer Hubspindel 8 versehen, die über ein Antriebsrad 9 und ein mit diesem kämmenden Getrieberitzel 10 durch ein nicht dargestelltes Antriebsorgan, einem Motor, zusammen mit dem Unterkolben 4 hebbar ist, siehe Figur 3, oder aus letzterer Stellung absenkbar ist, siehe Figuren 1 und 2. Der Oberkolben 5 der Espressobrüheinheit 1 gehört zu einem Oberkolbenschlitten 5a und ist gegenüber dem Brühkammerzylinder 3 durch eine nicht dargestellte Antriebsbaugruppe horizontal verschiebbar. Eine dazu vorgesehene Führungskulisse des Oberkolbensehlittens ist ebenfalls nicht zeichnerisch dargestellt. Aus den Figuren 1 und 3 ist eine linke Stellung des Oberkolbens 5 bzw. des Oberkolbenschlittens 5a ersichtlich, in der die Brühkammer zum Verschluß vorbereitet bzw. verschlossen ist und aus Figur 2 eine rechte Endstellung des Oberkolbens bzw. des Oberkolbenschlittens, in der die Brühkammer vollständig geöffnet ist.

Ein Brühwassereinlauf 11 in dem Unterkolben steht mit einem Brühwasserzulaufstutzen 12 in Verbindung. Der Brühwassereinlauf 11 mündet in eine Brühwasserverteilkammer 13, die aus dem Unterkolben 4 unter einem Brühwassersieb 14 ausgeformt ist.

Der gegenüber dem Brühkammerzylinder 3 mit dem Oberkolbenschlitten 5a horizontal verschiebbare Oberkolben 5 weist ein Cremaventil 15 auf, welches die Brühkammer erst nach Erreichen eines vorgegebenen Überdrucks öffnet, sowie eine Kaffeesammelkammer 16 zwischen dem Cremaventil 15 und einem Kaffeesieb 17.

Von dem Cremaventil führt eine Kaffeeauslaufleitung 18 zu einem Kaffeeauslauf 19, unter dem eine Tasse 20 aufstellbar ist.

Die bisher beschriebene Espressobrüheinheit 1 gehört zum Stand der Technik (DE 20 2004 018 776.0).

Eine erste bevorzugte Ausführungsform einer der Espressobrüheinheit 1 zugeordneten Rücksaugeinheit 21 ist in den Figuren 1 bis 3 dargestellt. Die Rücksaugeinheit 21 umfaßt einen Saugzylinder 22 und einen in diesem verschiebbaren Saugkolben 23 mit Dichtungen 23a, 23b, der über ein Kolbenpleuel 24 betätigt werden kann. Hierzu sitzt an dem unteren Ende des Kolbenpleuels 24 ein Bolzen 25, der in Eingriff mit einem stirnseitig offenen Schlitz 26 in einer mit dem Brühkammerzylinder 3 fest verbundenen Antriebsstange 27 gelangen kann. Der den Saugkolben 23 aufnehmende Saugzylinder 22 ist nahe benachbart dem Oberkolben 5 angeordnet, so daß er in den in den Figuren 1 und 3 gezeigten Stellungen des Oberkolbens 5 jedoch nicht mit dem Brühkammerzylinder 3 kollidiert, während er in der Stellung gemäß Figur 2 von dem Brühkammerzylinder 3 entfernter ist. Bevorzugt bildet der Saugzylinder 22 eine Baueinheit mit dem Oberkolben 5 in dem Oberkolbenschlitten 5a. Dies hat unter anderem den Vorteil, daß die kraftübertragende Antriebsstange 27 zu dem Kolbenpleuelbolzen 25 kurz sein kann und somit nur einen kurzen Hebelarm bei einer Kraftübertragung von dem Brühkammerzylinder 3 zu dem Saugkalben 23 bzw. dem Kolbenpleuel 24 bildet.

Die Rücksaugeinheit 21 steht mit der Kaffeeauslaufleitung 18 über eine Saugleitung 28 in fluidleitender Verbindung, die somit an einer Stelle zwischen dem Cremaventil 15 und dem Kaffeeauslauf 19 in die Kaffeeauslaufleitung 18 angeschlossen ist, und zwar in der Ausführungsform gemäß den Figuren 1 bis 3 in deren waagerechten Abschnitt in der Nähe des Cremaventils 15. Andererseits mündet die Saugleitung 28 in einen nicht bezeichneten Zylinderkopf des Saugzylinders 22. Wie aus den Figuren 1 bis 3 ersehen werden kann, endet in den Innenraum des Saugzylinders 22 weiterhin eine Ablaufleitung 29, und zwar direkt oberhalb des Saugkolbens 23 in dessen in den Figuren 1 und 2 dargestellter unteren Totpunktlage. In den Saugzylinder gesaugter Saugkaffee oder Kaffeerest aus der Kaffeeauslaufleitung 18 kann somit vollständig aus dem Saugzylinder 22 über die Ablaufleitung 29 in eine Auffangschale 30 abfließen.

In der in Figur 2 dargestellten Stellung der Espressobrüheinheit 1 ist der Oberkolben 5 bei abgesenktem Brühkammerzylinder 3 horizontal in eine rechte Endstellung verschoben, in der er eine obere Öffnung des Brühkammerzylinders völlig freilegt. Damit ist gleichzeitig die Ankopplung des Kolbenpleuels 24 an den Brühkammerzylinder 3 gelöst, da der Kolbenpleuelbolzen 25 aus dem Schlitz 26 der Antriebsstange 27 an dem Brühkammerzylinder 3 herausgezogen ist.

Nach einem Füllvorgang der Brühkammer 2 mit Kaffeemehl K wird der Oberkolben 5 wieder über den Brühkammerzylinder 3 horizontal geschoben, analog zu Figur 1, wobei der Kolbenpleuelbolzen 25 in den Schlitz 26 der Antriebsstange 27 gleitet, die somit in der Lage ist, den Kolbenpleuel 24 anzuheben.

Vor Einleitung eines Brühvorgangs wird der Brühkammerzylinder 3 zusammen mit dem Unterkolben 4 vertikal nach oben über die Unterseite des Oberkolbens 5 angehoben, wie aus Figur 3 ersichtlich, Dabei wird die Brühkammer 2 geschlossen und das in der Brühkammer 2 befindliche Kaffeemehl wird verdichtet. Gleichzeitig zu der vertikalen Verschiebung des Brühkammerzylinders 3 wird der Saugkolben 23 nach oben gedrückt, wobei dieser eine Ausgangslage für eine anschließende Saugfunktion einnimmt.

Nach Beendigung des Brühvorganges, während dessen das Cremaventil 15 nach Erreichen eines vorgegebenen Druckes in der Brühkammer 2 durch das über den Brühwasserzulaufstutzen 12 eingeleitete heiße Brühwasser geöffnet war, schließt das Cremaventil 15 wieder und der Brühkammerzylinder 3 fährt aus der in Figur 3 dargestellten Position nach unten in die in Figur 1 dargestellte Lage, in welcher der Oberkolbenschlitten 5a bzw. der Oberkolben 5 horizontal verschoben werden kann. Gleichzeitig mit dem Absenken des Brühkammerzylinders 3 saugt der Saugkolben 23 in dem Saugzylinder 22 infolge der Kopplung des Kolbenpleuels 24 mit der Antriebsstange 27 Kaffeerest aus der Kaffeeauslaufleitung 18 ab, der durch die Ablaufleitung 29 weiter in die Auffangschale 30 abfließt. Anschließend wird die Brühkammer 2 durch horizontales Verschieben des Oberkolbenschlittens 5a bzw. des Oberkolbens 5 in die in Figur 2 dargestellte rechte Endposition wiederum geöffnet, wonach der Kaffeekuchen K durch den Unterkolben 4 bei Aktivierung eines Unterkolbenhubzylinders 31 so weit angehoben wird, daß er ausgeschoben werden kann. Nach Absenken des Unterkolbens 4 ist ein Zyklus des Espressobrühvorgangs beendet.

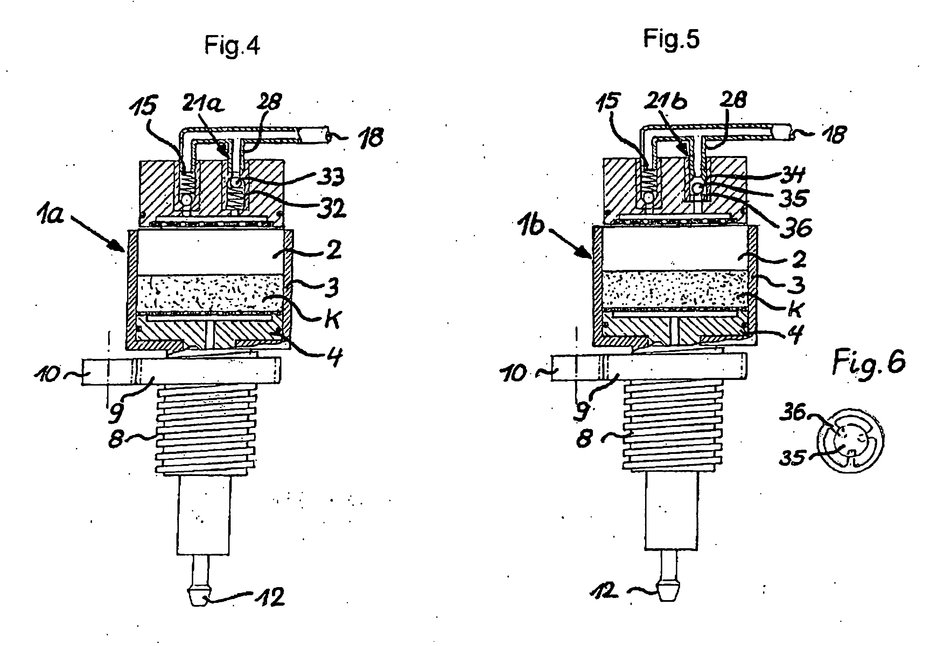

Die zweite Ausführungsform der Rücksaugeinheit 21 a nach Figur 4 weist statt des Saugzylinders 22 und dessen Koppelelementen zusätzlich zu der Espressobrüheinheit 1a nur ein Ventil 32 mit einer federbelasteten Kugel 33 auf, welche in der in Figur 4 dargestellten Verschlußstellung einen oberen, nicht bezeichneten Ventilsitz dicht verschließt, wenn in der Brühkammer 2 kein Unterdruck herrscht. Diese Verschlußstellung nimmt das Ventil 32 insbesondere auch dann an, wenn Espresso durch Zufuhr von Brühwasser in die Brühkammer aus dem Brühwasserzulaufstutzen 12 über die Brühwasserverteilkammer 13 aufgebrüht wird und nach Erreichen vorgegebenen Innendrucks der Brühkammer über das Cremaventil 15 in die Kaffeeauslaufleitung 18 strömt.

Nachdem zur Beendigung des Brühvorgangs die Brühwasserzufuhr zu der Brühkammer 2 gestoppt ist und wenn der nach unten bewegte Brühkammerzylinder 3 mit dem Unterkolben 4 einen Unterdruck in der Brühkammer 2 erzeugt, wird das Ventil 32 entgegen der Federbelastung der Kugel 32 geöffnet und durch den Unterdruck in der Brühkammer 2 Kaffeerest aus der Kaffeeauslaufleitung 18 über die Saugleitung 28 in die Brühkammer 2 zurückgesaugt. Dieser Kaffeerest kann zusammen mit dem ausgelaugten Kaffeekuchen K aus der Brühkammer 2 mit dem Unterkolben 4 gehoben und dann herausgeschoben werden, wenn die Brühkammer bei abgesenktem Brühkammerzylinder 3 durch horizontales Verfahren des Oberkolbens 5 in die in Figur 2 dargestellte Stellung geöffnet ist.

Zu der Rücksaugeinheit 21 a gemäß Figur 4 kann somit außer dem Ventil 32 der Teil der Espressobrüheinheit 1 a gezählt werden, der den erforderlichen Unterdruck zum Zurücksaugen des Kaffeerests aus der Kaffeeauslaufleitung 18 erzeugt.

Die dritte Ausführungsform der Espressobrüheinheit 1b gemäß Figur 5 mit der Rücksaugeinheit 21 b unterscheidet sich von der Espressobrüheinheit 1 a mit der Rücksaugeinheit 21 a nur durch ein anderes Ventil 34 zusätzlich zu dem Cremaventil 15. Das zusätzliche Ventil 34 weist hier eine Kugel 35 auf, die nicht unter Federbelastung steht. Die Kugel 35 liegt normalerweise nur durch Schwerkraft auf einem unteren fluidleitenden Ventilsitz 36 auf, der mit der Brühkammer 2 ständig in Verbindung steht.

Eine beispielsweise Form des fluidleitenden Ventilsitzes 36 ist in einer Draufsicht gemäß Figur 6 dargestellt. Er besteht darin im wesentlichen aus drei nicht bezeichneten Haltearmen, die in eine Öffnung hereinragen und auf denen die Kugel 35 aufliegt, solange diese nicht durch den Brühkammerinnendruck gegen einen oberen, nicht bezeichneten Ventilsitz geschoben wird und jenen Ventilsitz gegenüber der Saugleitung 28 und der Kaffeeauslaufleitung 18 abdichtet. Das Abdichten erfolgt bereits bei geringem Innendruck in der Brühkammer, bevor das Cremaventil durch den in der Brühkammer bei Zufluß des Brühwassers ansteigenden Druck geöffnet wird. Wenn hingegen nach Beendigung des Brühvorgangs der Innendruck in der Brühkammer 2 absinkt und der Brühkammerzylinder 3 in die in Figur 5 dargestellte Stellung nach unten zurückgefahren wird und einen Unterdruck in der Brühkammer 2 erzeugt, fällt die Kugel 35 wieder von dem oberen Ventilsitz auf den unteren Ventilsitz 34 zurück und Kaffeerest wird aus der Kaffeeauslaufleitung 18 über eine kurze Saugleitung 28 in die Brühkammer 2 zurückgesaugt.

### Bezugszeichenliste

- 1: Espressobrüheinheit
- 1 a: Espressobrüheinheit
- 1 b: Espressobrüheinheit
- 2: Brühkammer
- 3: Brühkammerzylinder
- 4: Unterkolben
- 5: Oberkolben
- 5a: Oberkolbenschlitten
- 6: Dichtung
- 7: Dichtung
- 8: Hubspindel
- 9: Antriebsrad
- 10: Getrieberitzel
- 11: Brühwassereinlauf
- 12: Brühwasserzulaufstutzen
- 13: Brühwasserverteilkammer
- 14: Brühwassersieb
- 15: Cremaventil
- 16: Kaffeesammelkammer
- 17: Kaffeesieb
- 18: Kaffeeauslaufleitung
- 19: Kaffeeauslauf
- 20: Kaffeetasse
- 21: Rücksaugeinheit
(1. Ausführung)
- 21 a: Rücksaugeinheit
(2. Ausführung)
- 21 b: Rücksaugeinheit
(3. Ausführung)
- 22: Saugzylinder
- 23: Saugkolben
- 23a: Dichtung
- 23b: Dichtung
- 24: Kolbenpleuel
- 25: Kolbenpleuel-Bolzen
- 26: Schlitz
- 27: Antriebsstange
- 28: Saugleitung
- 29: Ablaufleitung
- 30: Auffangschale
- 31: Unterkolbenhubzylinder
- 32: Ventil
- 33: federbelastete Kugel
- 34: Ventil ohne Feder
- 35: Kugel
- 36: unterer Ventilsitz

- K: Kaffeemehlkuchen

## Patentansprüche

1. Espressomaschine mit einer Espressobrüheinheit (1, 1a, 1b) und mit einer mit der Brüheinheit über ein Cremaventil (15) in fluidleitender Verbindung stehenden Kaffeeauslaufleitung (18) mit einem endseitigen Kaffeeauslauf (19),
**dadurch gekennzeichnet,**
**daß** mit der Kaffeeauslaufleitung (18) zwischen dem Cremaventil (15) und dem Kaffeeauslauf (19) eine Rücksaugeinheit (21, 21a, 21b) in fluidleitender Verbindung steht, die selbsttätig nach Beendigung eines Brühvorgangs aktivierbar ist.

2. Espressomaschine nach Anspruch 1,
**dadurch gekennzeichnet,**
**daß** die Espressobrüheinheit (1) eine Brühkammer (2) und wenigstens ein verstellbares Brühkammerelement aufweist und daß die Rücksaugeinheit (21) außerhalb der Brühkammer benachbart zu dem verstellbaren Brühkammerelement angeordnet ist und einen in einem Saugzylinder (22) verschiebbaren Saugkolben (23) umfaßt, der mit dem verstellbaren Brühkammerelement zumindest zeitweise koppelbar ist, und daß der Saugzylinder (22) mit einer Ablaufleitung (29) verbunden ist.

3. Espressomaschine nach Anspruch 2.
**dadurch gekennzeichnet,**
**daß** das verstellbare Brühkammerelement ein Brühkammerzylinder (3) ist, der im wesentlichen unterhalb eines Oberkolbens (5) angeordnet ist, so daß er mit diesem eine Brühkammer (2) bilden kann, daß der Brühkammerzylinder (3) zum vollständigen Schließen der Brühkammer (2) im wesentlichen vertikal auf den Oberkolben schiebbar ist und durch im wesentlichen vertikales Absenken von dem Oberkolben (5) lösbar ist, daß der Oberkolben (5) zum vollständigen Öffnen der Brühkammer (2) bei gelöstem Brühkammerzylinder (3) und umgekehrt zum Schließen der Brühkammer im wesentlichen horizontal verschiebbar ist und daß Koppelelemente (25, 26, 27) zwischen dem Brühkammerzylinder (3) und einem Kolbenpleuel (24) an dem Saugkolben (23) der Rücksaugeinheit (21) so angeordnet sind, daß sie durch horizontale Verschiebung des Oberkolbens (5) in eine vollständig geöffnete Position der Brühkammer entkoppelbar sind und durch umgekehrte horizontale Verschiebung des Oberkolbens (5) in eine Schließposition der Brühkammer (2) koppelbar sind und in gekoppeltem Zustand geeignet sind, die vertikale Verschiebung des Brühkammerzylinders (3) auf den Saugkolben (23) zu übertragen.

4. Espressomaschine nach den Anspruch 3,
**dadurch gekennzeichnet,**
**daß** wenigstens eines (26, 27) der Koppelelemente mit dem Brühkammerzylinder (3) verbunden ist und wenigstens ein anderes (25) der Koppelelemente mit dem Kolbenpleuel (24) des Saugkolbens (23) in Verbindung steht.

5. Espressomaschine nach Anspruch 3,
**dadurch gekennzeichnet,**
**daß** der den Saugkolben (23) aufnehmende Saugzylinder (22) eine Einheit mit dem Oberkolben (5) bildet und daß die Koppelelemente (25, 26, 27) zwischen dem Brühkammerzylinder (3) und dem Kolbenpleuel (24) einerseits einen stirnseitig offenen horizontalen Schlitz (26) in einer Antriebsstange (27) an dem Brühkammerzylinder (3) und andererseits einen durch horizontale Verschiebung des Oberkolbens (5) in den Schlitz (26) einführbaren Bolzen (25) an dem Kolbenpleuel (24) des Saugkolbens (23) umfassen.

6. Espressomaschine nach wenigstens einem der Ansprüche 2 bis 5,
**dadurch gekennzeichnet ,**
**daß** eine Saugleitung (28) aus der Kaffeeauslaufleitung (18) zwischen dem Cremaventil (15) und dem Kaffeeauslauf (19) abgezweigt ist und in einen Saugzylinderkopf mündet und daß sich die Ablaufleitung (29) von einer Öffnung in dem Saugzylinder (22) an einer Stelle über dem Kolben (23) in dessen unterer Totpunktlage außen nach unten erstreckt.

7. Espressomaschine nach Anspruch 1,
**dadurch gekennzeichnet ,**
**daß** die Rücksaugeinheit (21a, 21 b) ein zwischen einer Brühkammer (2) und der Kaffeeauslaufleitung (18) strömungsmäßig parallel zu dem Cremaventil (15) angeordnetes Ventil (32, 34) umfaßt, welches so ausgebildet ist, daß es bei Unterdruck in der Brühkammer (2) öffnet.

8. Espressomaschine nach Anspruch 7.
**dadurch gekennzeichnet ,**
**daß** das Ventil (32) eine federbelastete Kugel (33) aufweist, die das Ventil (32) bei Unterdruck in der Brühkammer (2) öffnet.

9. Espressomaschine nach Anspruch7,
**dadurch gekennzeichnet ,**
**daß** das Ventil (34) eine nur durch Schwerkraft belastete Kugel (35) auf einem unteren Ventilsitz (36) aufweist, der fluidleitend ist, und daß die Kugel (35) bei Überdruck in der Brühkammer (2) an einem oberen Ventilsitz zur Anlage gelangt und damit das Ventil (34) schließt.

10. Espressomaschine nach Anspruch 3 und wenigstens einem der Ansprüche 7 bis 9,
**dadurch gekennzeichnet ,**
**daß** das Ventil (32, 34) in dem Oberkolben (5) angeordnet ist.

## Claims

1. Espresso machine with a brewing device (1, 1a, 1b) and in fluid-conductive connection, via a crema valve (15), with a coffee outlet duct (18), having an end-sided coffee outlet (19)
**characterized in**
**that** a back suction unit (21, 21a, 21b) is in fluid-conductive connection with said coffee outlet duct (18) between said crema valve (15) and said coffee outlet (19), which can automatically be activated after the end of a brewing process.

2. Espresso machine according to claim 1,
**characterized in**
**that** said espresso brewing device (1) comprises a brewing chamber (2) and at least one adjustable brewing chamber element and that said back suction unit (21) is disposed outside of said brewing chamber adjacent to said adjustable brewing chamber element and includes a suction piston (23) movable in a suction cylinder (22), which suction piston can be coupled, at least temporarily, to said adjustable brewing chamber element, and that said suction cylinder (22) is connected to a drain duct (29).

3. Espresso machine according to claim 2,
**characterized in**
**that** said adjustable brewing chamber element is a brewing chamber cylinder (3) which is substantially disposed below a top piston (5) so that, together with the latter, it can form a brewing chamber (2), that in order to completely close said brewing chamber (2) said brewing chamber cylinder (3) can be moved substantially vertically on said top piston and can be removed from said top piston (5) by lowering it substantially vertically, that in order to completely open said brewing chamber (2) with the brewing chamber cylinder (3) removed, and vice versa, in order to close said brewing chamber, said top piston (5) can be moved substantially horizontally, and that coupling elements (25, 26, 27) are arranged between said brewing chamber cylinder (3) and a piston rod (24) on said suction piston (23) of said back suction unit (21) so that by horizontally moving said top piston (5) they can be decoupled into a completely opened position of said brewing chamber and by reverse horizontal movement of said top piston (5) can be coupled into a locking position of said brewing chamber (2) and are suited in the coupled state to transfer the vertical movement of said brewing chamber cylinder (3) onto said suction piston (23).

4. Espresso machine according to claim 3,
**characterized in**
**that** at least one (26, 27) of said coupling elements is connected with said brewing chamber cylinder (3) and at least one other (25) of said coupling elements is in connection with said piston rod (24) of said suction piston (23).

5. Espresso machine according to claim 3,
**characterized in**
**that** said suction cylinder (22) receiving said suction piston (23) forms one unit together with said top piston (5) and that said coupling elements (25, 26, 27), on one hand, include, between said brewing chamber cylinder (3) and said piston rod (24), a horizontal slit (26) open on the front in a driving rod (27) on said brewing chamber cylinder (3) and, on the other hand, a bolt (25) on said piston rod (24) of said suction piston (23) which bolt can be inserted by horizontal movement of said top piston (5) into said slit (26).

6. Espresso machine according to at least one of claims 2 through 5
**characterized in**
**that** a suction duct (28) is branched off from said coffee outlet duct (18) between said crema valve (15) and said coffee outlet (19), passing into a suction cylinder head, and that said drain duct (29) extends outside downwardly from an opening in said suction cylinder (22) at a location above said piston (23) in the lower dead point position thereof.

7. Espresso machine according to claim 1
**characterized in**
**that** said back suction unit (21a, 21b) comprises, between a brewing chamber (2) and said coffee outlet duct (18), a valve (32, 34) flow-wisely disposed in parallel to said crema valve (15), which is adapted to open in case of under pressure in said brewing chamber (2).

8. Espresso machine according to claim 7,
**characterized in**
**that** said valve (32) includes a spring-loaded ball (33) which opens said valve (32) in case of under pressure in said brewing chamber (2).

9. Espresso machine according to claim 7,
**characterized in**
**that** said valve (34) includes a ball (35) loaded only be gravity on a lower valve seat (36) which is fluid-conducting, and that in case of overpressure said ball (35) sits close to the upper valve seat thus closing said valve (34).

10. Espresso machine according to claim 3 and at least one of claims 7 through 9,
**characterized in**
**that** said valve (32, 34) is disposed in said top piston (5).

## Revendications

1. Machine à espresso comprenant une unité d'ébouillantage (1, 1a, 1b) pour espresso ainsi qu'un conduit de sortie (18) pour 1e café, placé en liaison conductrice de fluide, par l'intermédiaire d'une valve à crème (15), avec l'unité d'ébouillantage et présentant un orifice de sortie (19) pour le café, situé à son extrémité,
**caractérisée**
**en ce qu'**avec le conduit de sortie (18) pour le café est placée en liaison conductrice de fluide, entre la valve à crème (15) et l'orifice de sortie (19) pour le café, une unité de rétroaspiration (21, 21a, 21b), qui est activable automatiquement après l'achèvement d'une phase d'ébouillantage.

2. Machine à espresso selon la revendication 1, **caractérisée**
**en ce que** l'unité d'ébouillantage (1) pour espresso présente une chambre d'ébouillantage (2) et au moins un organe ajustable de chambre d'ébouillantage et en ce que l'unité de rétroaspiration (21) est disposée à l'extérieur de la chambre d'ébouillantage, au voisinage de l'organe ajustable de chambre d'ébouillantage, et comprend un piston d'aspiration (23) qui peut coulisser dans un cylindre d'aspiration (22) et qui peut être accouplé, au moins temporairement, à l'organe ajustable de chambre d'ébouillantage, et en ce que le cylindre d'aspiration (22) est relié à un conduit d'évacuation (29).

3. Machine à espresso selon la revendication 2, **caractérisée**
**en ce que** l'organe ajustable de chambre d'ébouillantage est un cylindre de chambre d'ébouillantage (3), qui est disposé sensiblement au-dessous d'un piston supérieur (5), afin de pouvoir former une chambre d'ébouillantage (2) avec lui, en ce que le cylindre de chambre d'ébouillantage (3) peut être poussé sur le piston supérieur, en direction sensiblement verticale, en vue de la fermeture complète de la chambre d'ébouillantage (2) et peut être détaché du piston supérieur (5) par un mouvement d'abaissement sensiblement vertical, en ce que le piston supérieur (5) est déplaçable en translation sensiblement horizontale, lorsque le cylindre de chambre d'ébouillantage (3) en est détaché, en vue de l'ouverture complète de la chambre d'ébouillantage (2), et en sens inverse, en vue de la fermeture de la chambre d'ébouillantage, et en ce que des organes d'accouplement (25, 26, 27) entre le cylindre de chambre d'ébouillantage (3) et une bielle de piston (24) prévue sur le piston d'aspiration (23) de l'unité de rétroaspiration (21), sont disposés d'une façon telle, qu'ils peuvent être désaccouplés par la translation horizontale du piston supérieur (5) dans une position complètement ouverte de la chambre d'ébouillantage et peuvent être accouplés par la translation horizontale, de sens inverse, du piston supérieur (5) dans une position de fermeture de la chambre d'ébouillantage (2), et sont adaptés, dans l'état accouplé, pour transmettre la translation verticale du cylindre de chambre d'ébouillantage (3) au piston d'aspiration (23).

4. Machine à espresso selon la revendication 3, **caractérisée**
**en ce qu'**au moins l'un (26, 27) des organes d'accouplement est relié au cylindre de chambre d'ébouillantage (3) et au moins un autre (25) des organes d'accouplement est placé en liaison avec la bielle de piston (24) du piston d'aspiration (23).

5. Machine à espresso selon la revendication 3, **caractérisée**
**en ce que** le cylindre d'aspiration (22) recevant le piston d'aspiration (23), forme un ensemble unitaire avec le piston supérieur (5) et en ce que les organes d'accouplement (25, 26, 27) entre le cylindre de chambre d'ébouillantage (3) et la bielle de piston (24) comprennent, d'une part, une fente horizontale (26) ouverte frontalement dans une tige d'actionnement (27), prévue sur le cylindre de chambre d'ébouillantage (3), et, d'autre part, un axe (25) prévu sur la bielle de piston (24) du piston d'aspiration (23) et pouvant être introduit dans la fente (26) par la translation horizontale du piston supérieur (5).

6. Machine à espresso selon l'une, au moins, des revendications 2 à 5,
**caractérisée**
**en ce qu'**un conduit d'aspiration (28) est en dérivation sur le conduit de sortie (18) pour le café, entre la valve à crème (15) et l'orifice de sortie (19) pour le café, et débouche dans une tête du cylindre d'aspiration, et en ce que le conduit d'évacuation (29) s'étend extérieurement, vers le bas, depuis une ouverture pratiquée dans le cylindre d'aspiration (22), en un emplacement situé au-dessus du piston (23) dans sa position de point mort inférieure.

7. Machine à espresso selon la revendication 1, **caractérisée**
**en ce que** l'unité de rétroaspiration (21a, 21b) comprend une valve (32, 34) qui est disposée entre une chambre d'ébouillantage (2) et le conduit de sortie (18) pour le café, parallèlement à la valve à crème (15) en termes d'écoulement, et qui est conçue de façon à s'ouvrir en cas de dépression dans la chambre d'ébouillantage (2).

8. Machine à espresso selon la revendication 7, **caractérisée**
**en ce que** la valve (32) présente une bille (33) chargée par ressort, qui ouvre la valve (32) en cas de dépression dans la chambre d'ébouillantage (2).

9. Machine à espresso selon la revendication 7, **caractérisée**
**en ce que** la valve (34) présente une bille (35) uniquement soumise à la force de pesanteur, sur un siège de valve inférieur (36), qui laisse passer les fluides, et en ce que la bille (35), en cas de surpression dans la chambre d'ébouillantage (2), vient se mettre en appui contre un siège de valve supérieur et ferme ainsi la valve (34).

10. Machine à espresso selon la revendication 3 et au moins l'une des revendications 7 à 9, **caractérisée**
**en ce que** la valve (32, 34) est disposée dans le piston supérieur (5).
